# EUROPEAN PATENT SPECIFICATION

(11) **EP 3 270 134 B1**
(45) Date of publication and mention of the grant of the patent: **09.06.2021**
(21) Application number: 16761722.4
(22) Date of filing: 07.03.2016
(51) Int. Cl.: G01M 3/02, G01J 5/48, G08B 21/12, G01M 3/00, G01M 3/04, G01M 3/38

(54) **GAS LEAK LOCATION ESTIMATING DEVICE, GAS LEAK LOCATION ESTIMATING SYSTEM, GAS LEAK LOCATION ESTIMATING METHOD AND GAS LEAK LOCATION ESTIMATING PROGRAM**
GASLECKSTELLENBESTIMMUNGSVORRICHTUNG, GASLECKSTELLENBESTIMMUNGSSYSTEM, GASLECKSTELLENBESTIMMUNGSVERFAHREN UND GASLECKSTELLENBESTIMMUNGSPROGRAMM
DISPOSITIF D'ESTIMATION D'EMPLACEMENT DE FUITE DE GAZ, SYSTÈME D'ESTIMATION D'EMPLACEMENT DE FUITE DE GAZ, PROCÉDÉ D'ESTIMATION D'EMPLACEMENT DE FUITE DE GAZ ET PROGRAMME D'ESTIMATION D'EMPLACEMENT DE FUITE DE GAZ

(30) Priority: 09.03.2015 JP 2015045658
(43) Date of publication of application: 17.01.2018
(73) Proprietor: Konica Minolta, Inc., Tokyo 100-7015 (JP)
(72) Inventor: KOH, Sei, Tokyo 100-7015 (JP)
(74) Representative: Hoffmann Eitle
(86) International application number: PCT/JP2016/057032
(87) International publication number: WO 2016/143754

(56) References cited:
- JP-A- H08 122 197
- JP-A- 2002 214 063
- JP-A- 2012 058 093
- US-A1- 2005 049 804
- US-A1- 2012 314 080

## Description

### Technological Field

The present invention relates to estimation of a gas leak location.

### Background Art

Heretofore, a system has been known to detect gas leaks in industrial plants with an infrared camera.

Patent Document 1 discloses a technique that involves selecting and displaying a pseudo color thermal image of an area having a temperature outside of a threshold based on an image signal acquired with the infrared camera to announce a gas leak and indicate the area having the temperature outside of the threshold due to the leaked gas.

### Prior Art Document

### Patent Document

Patent Document 1: Japanese Patent Application Laid-Open Publication No. Hei 09-021704

Document JP H08 122197 A describes a monitored image in an observed area being taken by an image input means, an image of luminace difference between a reference image stored beforehand and the image is extracted, the difference image is binary-coded on the basis of a prescribed threshold, and thereby a binary image is prepared. A corrected image preparing means calculates the present degree of consecutive detection of a section in the image wherein a leakage is detected, by adding 1 to the preceding degree of detection stored in a counter, while making zero the present degree of consecutive detection of the section in the image wherein the leakage is not detected, and thereby, it prepares a corrected image and outputs it to a shape discriminating means. The discriminating means discriminates a figure of a trace of the leakage out of the shape of the figure in the image and outputs the result to a leakage judging means. The judging means detects superposition of the position of a monitoring object being discriminated and an image of a leakage monitoring area stored beforehand and judges the existence or nonexistence of the leakage.

Document US 2012/314080 A1 describes a gas leakage detecting system for detecting leaking gas including a camera set having visible-light cameras and infrared cameras photographing a gas monitoring area, a composite image coupling unit that couples visible-light images captured by the visible-light cameras and infrared images captured by the infrared cameras, extracts gas leakage points from the coupled infrared images when a temperature of a specific gas, which was previously stored in a database (DB), is detected, and creates a composite of the extracted gas leakage points and the visible-light images to create composite images, a screen output unit outputting the composite images created by the composite image coupling unit to an administrator terminal so as to enable an administrator to identify the composite images, and a control unit analyzing a type of the gas and a gas leakage area from the temperature of the specific gas detected from the gas leakage points.

Document US 2005/049804 A1 describes an automated localization of a point source of a visualized gas leak, by searching in a corner response function, calculated based on a number of frames of said gas leak, for maximum values in the variables that are stable over the time variable. Considering a point as said point source if said corner response function has a maximum value in said point and said point is temporally stable.

Document JP 2012 058093 A describes a gas leakage detector for detecting gas leakage. The gas leakage detector has an infrared camera for photographing an area to be tested and an image processing unit for processing an infrared image photographed by the infrared camera. The image processing unit has a fluctuation extraction unit for extracting dynamic fluctuation due to gas leakage from a plurality of infrared images time-serially arranged.

### Summary of the Invention

### Problems to Be Solved by the Invention

Although the technique according to Patent Document 1 involves a process of displaying the area having the temperature outside of the threshold, it lacks the processing of analyzing and estimating the gas leak location and indicating and announcing the estimated gas leak location. Thus, users cannot accurately determine the gas leak location.

An object of the present invention, which has been conceived in light of the issues of the traditional art, is to accurately estimate a gas leak location.

### Means for Solving the Problems

The present invention is defined in the appended claims.

### Advantageous Effects of the Invention

According to the present invention, the gas leak location can be accurately estimated by processing based on a plurality of frames in chronological order because a gas leak location becomes constant regardless of passage of time.

### Brief Description of the Drawings

Fig. 1 is a functional block diagram illustrating a gas leak location estimating system according to a first embodiment of the present invention.
Fig. 2 is a schematic diagram illustrating various processing carried out to image frames according to the first embodiment of the present invention.
Fig. 3 illustrates a first embodiment of the present invention and includes; schematic diagram Ga illustrating a result of a count processing carried out to an image frame and a block corresponding to the estimated gas leak location; schematic diagram Gb illustrating an example composite image for display.
Fig. 4 is a functional block diagram illustrating a gas leak location estimating system according to a second embodiment of the present invention.
Fig. 5 is a functional block diagram illustrating a gas leak location estimating system according to a third embodiment of the present invention.
Fig. 6 illustrates the third embodiment of the present invention and includes; schematic diagram Ga illustrating a result of a count processing carried out to an image frame, a block corresponding to the estimated gas leak location, and blocks as preset candidates of the gas leak location; and schematic diagram Gb illustrating an example composite image for display.
Fig. 7 is a schematic diagram illustrating various processing carried out to an image frame according to a fourth embodiment of the present invention.
Fig. 8 illustrates the fourth embodiment and includes; schematic diagram Ga illustrating a result of a count processing carried out to an image frame and a block corresponding to the estimated gas leak location; and schematic diagram Gb illustrating an example composite image for display.

### Detailed Description of Embodiments

A device of estimating a gas leak location, a system of estimating a gas leak location, a method of estimating a gas leak location, and a program of estimating a gas leak location according to embodiments of the present invention will now be described with reference to the accompanying drawings. The embodiments described below should not be construed to limit the present invention. The gas leak location estimating system described below includes a gas leak location estimating device carrying out a gas leak location estimating method on the basis of a gas leak location estimating program, and an infrared camera.

### <First Embodiment

A gas leak location estimating system according to a first embodiment of the present invention will now be described.

The gas leak location estimating system 100 according to this embodiment includes an infrared camera 10, a visible light camera 20, and an information processor 30. The information processor 30 is composed of a computer including a processor and storage. A gas leak location estimating program stored in the storage is executed by the processor to activate functional components.

The information processor 30 includes the following functional components: a gas detector 31, a block divider 32, a block discriminator 33, a counter 34, a leak location estimator 35, and an image compositor 36.

The infrared camera 10 detects infrared radiant energy emerging from a monitoring target and converts the energy to a digital image signal. The visible light camera 20 detects visible light radiating from the monitoring target and converts the visible light to a digital image signal. The infrared camera 10 and the visible light camera 20 have identical angles of view. The monitoring target is, for example, a piping facility for an industrial plant.

The infrared camera 10 and the visible light camera 20 execute consecutive imaging at a predetermined frame rate (for example, 30 fps), and the frame data is sequentially input to the information processor 30.

The gas detector 31 detects a gas area in pixel unit from the infrared image signal input from the infrared camera 10 through any means, for example, temperature thresholding or motion detection method. The temperature thresholding is a method for discriminating a gas area, when a target to be detected is gas having a leakage temperature higher or lower than a temperature within a normal temperature range in the environment where the monitoring target is disposed, by using a threshold temperature for distinguishing from the temperature within the environment temperature range. The motion detection method is a method for discriminating a moving object area where differential signals of luminance signals of specific pixels in frames with respect to those of the respective pixels in a reference frame are higher than a predetermined threshold, to determine the moving object area as a gas area. The reference frame may be a one or more previous frame, or a past frame which has been still image as a whole in a certain period.

The block divider 32 divides each frame image of the infrared image signals into multiple blocks having a predetermined size. The size of a single block is, for example, 10x10 pixels.

The block discriminator 33 executes a block discrimination processing of discriminating whether each block in each frame is a gas area based on the results detected by the gas detector 31. The block discriminator 33 discriminates the block of which more than a predetermined percentage (50%, for example) of the pixels is detected as the gas area by the gas detector 31, and determines the block as the gas area. The block discriminator 33 assigns an identification value "1" to the block which is discriminated as the gas area, and an identification value "0" to the block which is not discriminated as the gas area.

The counter 34 executes a count processing of counting the number of times each block is discriminated as the gas area in the block discrimination processing, over chronological frames.

The leak location estimator 35 executes a leak location estimation processing of setting a block having a counted value which is obtained by the counter 34 and equal to or larger than a predetermined value, to an estimated gas leak location.

The image compositor 36 executes an image composition processing of defining a visible light image input from the visible light camera 20 as a back layer, extracting the pixels detected as the gas areas by the gas detector 31 from the infrared image signals input from the infrared camera 10, converting the extracted pixels to the visible light range to obtain an infrared imaging visualization image, overlaying the infrared imaging visualization image on the back layer while setting a predetermined transmittance, and overlaying an image indicating the block set as the estimated gas leak location by the leak location estimator 35 thereon. The composite image prepared by the image compositor 36 is output and displayed on the display monitor. A user can grasp the gas distribution and the gas leak location from the displayed image.

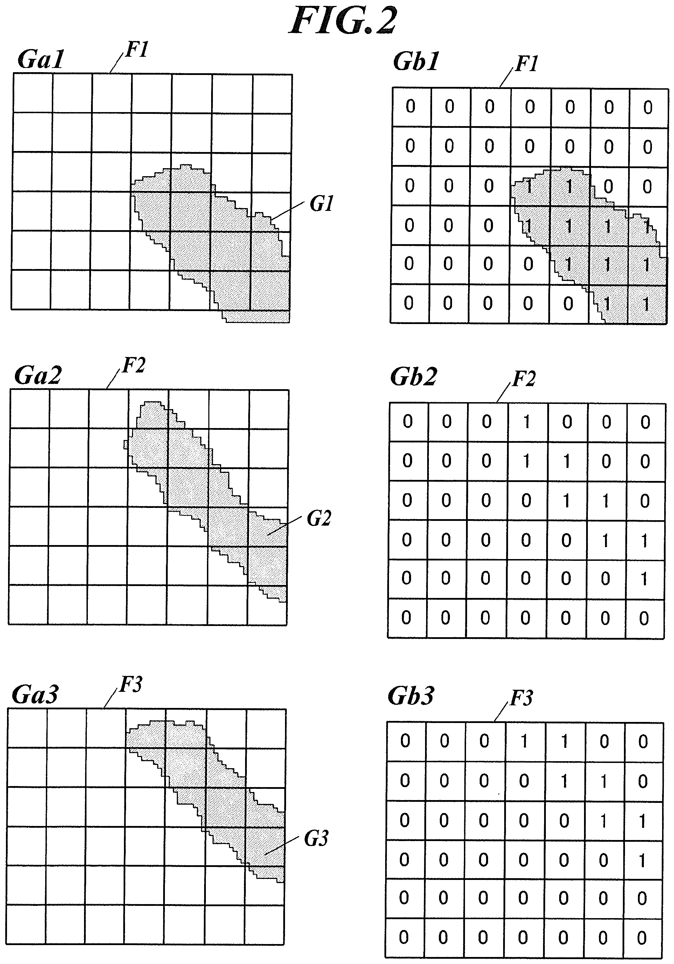

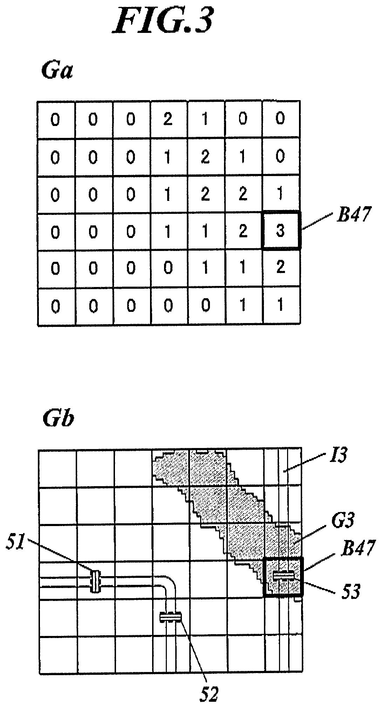

The steps of the processing described above will now be described in detail with reference to Figs. 2 and 3. For simplification, the processing of three frames will be described.

The gas detector 31 detects a gas area G1 in a first frame F1, as illustrated in Fig. 2 Ga1.

In response, the block discriminator 33 assigns an identification value "1" to the blocks which are discriminated as the gas area, and an identification value "0" to the blocks which are not discriminated as the gas area, as illustrated in Fig. 2 Gb1.

The gas detector 31 then detects a gas area G2 in a second frame F2, as illustrated in Fig. 2 Ga2.

In response, the block discriminator 33 assigns an identification value "1" to the blocks which are discriminated as the gas area, and an identification value "0" to the blocks which are not discriminated as the gas area, as illustrated in Fig. 2 Gb2.

The gas detector 31 then detects a gas area G3 in a third frame F3, as illustrated in Fig. 2 Ga3.

In response, the block discriminator 33 assigns an identification value "1" to the blocks which are discriminated as the gas area, and an identification value "0" to the blocks which are not discriminated as the gas area, as illustrated in Fig. 2 Gb3.

The counted values of the respective blocks obtained by the counter 34 through the above process are illustrated in Fig. 3 Ga. With reference to Fig. 3 Ga, the leak location estimator 35 defines the block B47 having a counted value equal to or larger than a predetermined value as an estimated gas leak location. In this case, the predetermined value is the maximum value.

The image compositor 36 defines a visible light image I3 input from the visible light camera 20 as a back layer as illustrated in Fig. 3 Gb, extracts the pixels detected as the gas area by the gas detector 31 from the infrared image signal input from the infrared camera 10, converts the extracted pixels to a visible light range to obtain an infrared imaging visualization image (G3), overlays the infrared imaging visualization image (G3) on the back layer while setting a predetermined transmittance, and overlays an image indicating a block B47 set as the estimated gas leak location by the leak location estimator 35 thereon, to generate a composite image.

The composite image of the visible light image and the infrared imaging visualization image is displayed as a still image of the most recent frame among the frames used in the above processing or a moving image of several most recent frames.

### <Second Embodiment

A gas leak location estimating system according to a second embodiment of the present invention will now be described.

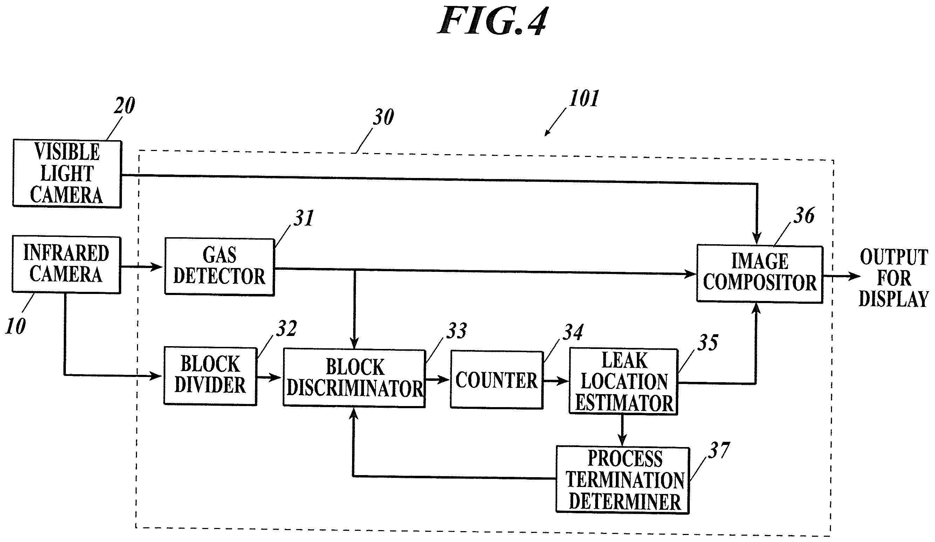

With reference to Fig. 4, the gas leak location estimating system 101 according to this embodiment is identical to the gas leak location estimating system 100 according to the first embodiment except that the information processor 30 further includes a process termination determiner 37.

The process termination determiner 37 determines whether the block set as the estimated gas leak location by the leak location estimator 35 remains unchanged over a predetermined number of times. For example, in the process described with reference to Fig. 2, the leak location estimator 35 executes the leak location estimation processing every three frames. In the case where the predetermined number of times is four, the process termination determiner 37 determines whether the block set as the estimated gas leak location by the leak location estimator 35 remains unchanged over four times.

If the block remains unchanged, the block discriminator 33 terminates the block discrimination processing. As a result, also the downstream steps by the counter 34, the leak location estimator 35, and the image compositor 36 are terminated.

The second embodiment described above can estimate a location of gas leak with certain reliability and reduce the load on the information processor 30.

### <Third Embodiment>

A gas leak location estimating system according to a third embodiment of the present invention will now be described.

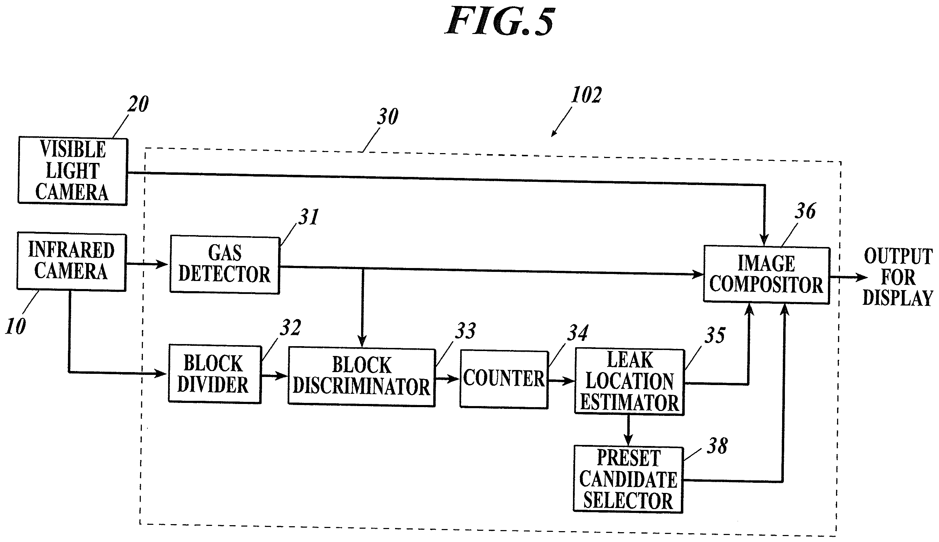

With reference to Fig. 5, the gas leak location estimating system 102 according to this embodiment is identical to the gas leak location estimating system 100 according to the first embodiment except that the information processor 30 further includes a preset candidate selector 38.

Multiple leak location candidates are preset by selection of positions in the frames captured by the infrared camera 10 and registered to the information processor 30.

The preset candidate selector 38 selects the leak location candidates closest to the block set by the leak location estimator 35.

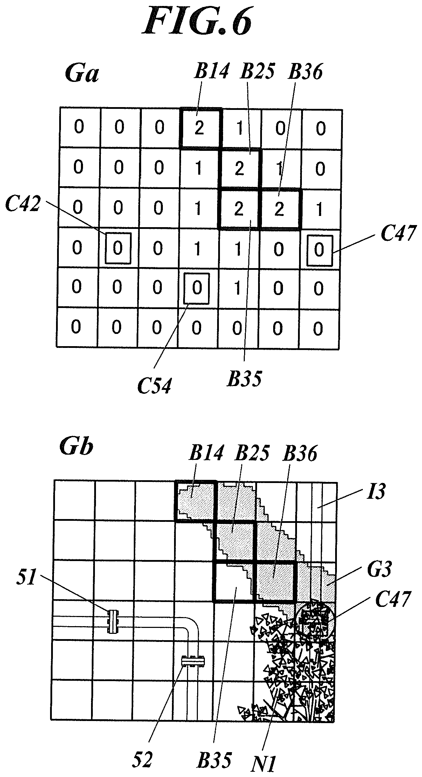

For example, blocks C42, C54, and C47 (see Fig. 6 Ga) depicting flanged joints 51, 52, and 53 are preliminarily set as the leak location candidates. This is because connections, such as joints, in the channel are prone to gas leakage.

The leak location estimator 35 estimates blocks B14, B25, B35, and B36 having maximum values "2" to be the locations of gas leak, as illustrated in Fig. 6 Ga.

The preset candidate selector 38 calculates the respective distances between the blocks B14, B25, B35 and B36 and the blocks C42, C47 and C54 and selects the leak location candidate having the smallest distance, i.e., the block C47. The distance should be the sum or average of linear distances calculated on the basis of the coordinates of the centers of the blocks.

With reference to Fig. 6 Gb, the image compositor 36 composes the image indicating the blocks B14, B25, B35 and B36 set by the leak location estimator 35 as in the first embodiment, and also composes the image indicating the block C47 selected by the preset candidate selector 38.

It should be noted that the image indicating the block C47 selected by the preset candidate selector 38 may be composed without composition of the image indicating the blocks B14, B25, B35 and B36 set by the leak location estimator 35.

According to the third embodiment described above, the gas leak location can be accurately estimated on the basis of preliminarily registered preset candidates, even if an obstacle N1, such as a tree, appears between the infrared camera 10 and the piping facility or monitoring target, as illustrated in Fig. 6 Gb.

Fig. 3 Gb illustrates a case that the obstacle N1 does not exist in Fig. 6 Gb. In this case, the block set by the leak location estimator 35 matches the block selected by the preset candidate selector 38. When the blocks match in this way, it is preferred to display, in addition to the display of the matched blocks, the fact that the block set as the estimated gas leak location on the basis of the image processing matches the block selected as the preset gas leak candidate in a discriminable manner.

### <Fourth Embodiment

A gas leak location estimating system according to a fourth embodiment of the present invention will now be described.

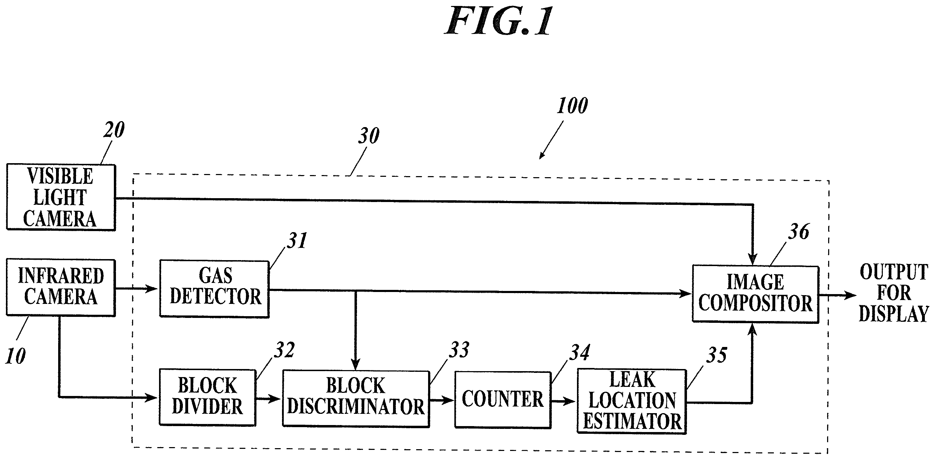

The gas leak location estimating system according to this embodiment has a configuration identical to that according to the first embodiment illustrated in Fig. 1 and executes the following process.

In this embodiment, the block divider 32 divides each frame image of an infrared image signal into 12x14 blocks.

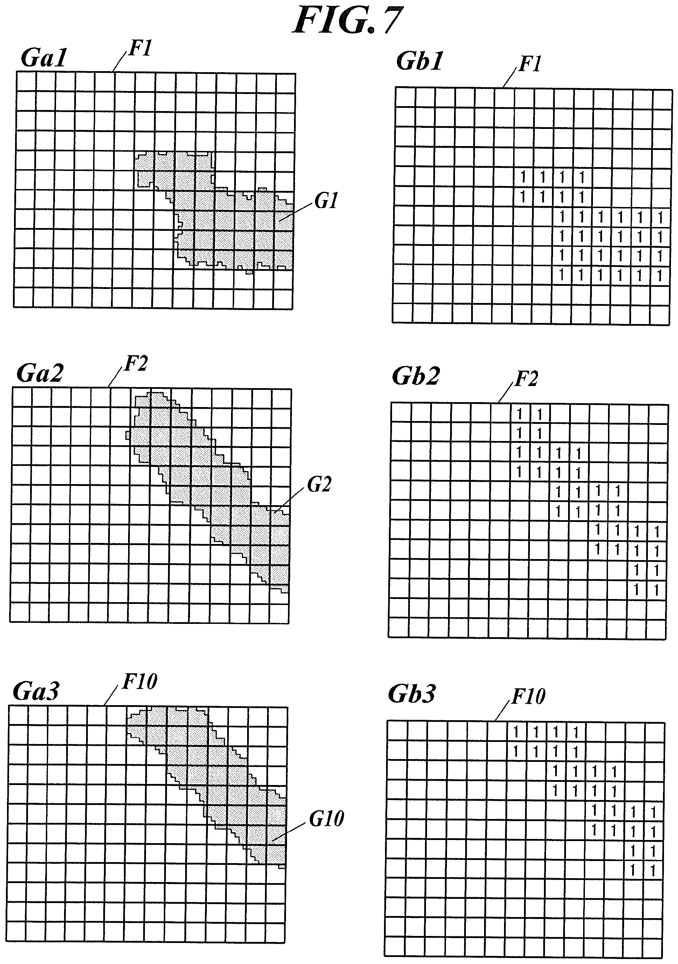

The gas detector 31 detects a gas area G1 in a first frame F1, as illustrated in Fig. 7 Gal.

In response, the block discriminator 33 assigns an identification value "1" to the blocks which are discriminated as the gas area, and an identification value "0" to the blocks which are not discriminated as the gas area, as illustrated in Fig. 7 Gb1.

The gas detector 31 then detects a gas area G2 in a second frame F2, as illustrated in Fig. 7 Ga2.

In response, the block discriminator 33 assigns an identification value "1" to the blocks which are discriminated as the gas area, and an identification value "0" to the blocks which are not discriminated as the gas area, as illustrated in Fig. 7 Gb2.

Similarly, third to ninth frames are processed to assign an identification value "1" or "0" to every block in each frame.

The gas detector 31 then detects a gas area G10 in a tenth frame F10, as illustrated in Fig. 7 Ga3.

In response, the block discriminator 33 assigns an identification value "1" to the blocks which are discriminated as the gas area, and an identification value "0" to the blocks which are not discriminated as the gas area, as illustrated in Fig. 7 Gb3.

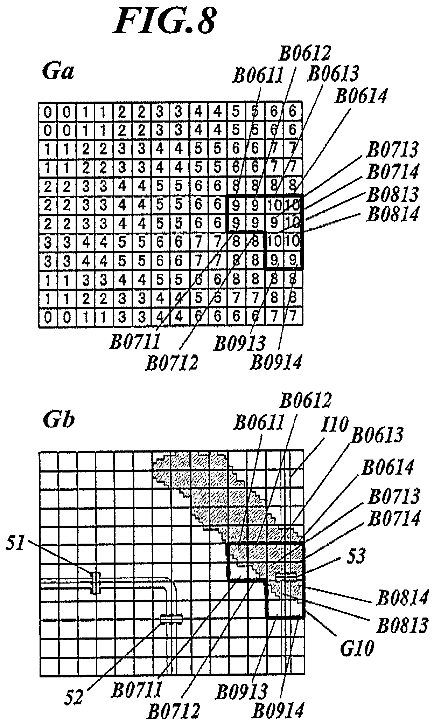

The counted values of the respective blocks obtained by the counter 34 through the above process are illustrated in Fig. 8 Ga. With reference to Fig. 8 Ga, the leak location estimator 35 discriminates the blocks B0611, B0612, B0613, B0614, B0711, B0712, B0713, B0714, B0813, B0814, B0913, and B0914 having counted values equal to or larger than a predetermined value as estimated locations of the gas leak. For example, the predetermined value is "9."

The image compositor 36 defines a visible light image I10 input from the visible light camera 20 as a back layer as illustrated in Fig. 8 Gb, extracts the pixels detected as a gas area by the gas detector 31 from the infrared image signal input from the infrared camera 10, converting the extracted pixels to a visible light range to obtain an infrared imaging visualization image (G10), overlays the infrared imaging visualization image (G10) on the back layer while setting a predetermined transmittance, and overlays an image indicating the blocks B0611, B0612, B0613, B0614, B0711, B0712, B0713, B0714, B0813, B0814, B0913 and B0914 to be the estimated locations of the gas leak by the leak location estimator 35 thereon, to generate a composite image.

The composite image of the visible light image and the infrared imaging visualization image is displayed as a still image of the most recent frame among the frames used in the processing or a moving image of several most recent frames.

If a maximum value or a value smaller than the maximum value (the average, for example) is selected to be the threshold of the counted values for determining the estimated gas leak location, values exceeding the threshold are always included even if these values have low absolute values. This might hinder accurate estimation of the gas leak location.

According to the fourth embodiment described above, the threshold of the counted values for determining the estimated gas leak location is a constant value. Thus, the gas leak location is not estimated if the maximum value is smaller than this constant value. In this way, the gas leak location can be more accurately estimated without effects of noise and other factors.

In the embodiments described above, three or ten frames are processed to estimate the gas leak location. Any other number of frames may be appropriately selected in consideration of frame rate, calculation load, and estimated accuracy.

In the embodiments described above, the visible light image I3 captured by the visible light camera 20 is defined as the back layer, to emphasize the gas leak location estimated through image composition. Besides a captured image, the back layer may be a graphic image prepared in advance.

Although the embodiments described above include an image compositor 36, the image compositor 36 may be omitted because the composite image is displayed for the viewing of a user and unnecessary if the gas leak location estimated by the system according to the present invention is to be announced to another system including a computer.

### Industrial applicability

The present invention can detect a gas leak, for example, in an industrial plant and specify the gas leak location.

### Description of Reference Numerals

- 10: infrared camera
- 20: visible light camera
- 30: information processor
- F1: frame
- F2: frame
- F3: frame
- G1: gas area
- G2: gas area
- G3: gas area
- I3: visible light image
- N1: obstacle

## Claims

1. A gas leak location estimating device (100) comprising:
an information processor (30) configured to acquire image information on a plurality of frames from an infrared camera (10), the information processor including the following functional components:
a gas detector (31) configured to detect a gas area in a pixel unit from a frame input from the infrared camera (10);
a block discriminator (33) configured to divide an image area of each of the frames into a plurality of blocks and discriminate the block as the gas area for each block in each frame when the block of which more than a predetermined percentage of the pixels among the pixels in the block is detected as the gas area by the gas detector (31);
a counter (34) configured to count a number of times each of the blocks is discriminated as the gas area, over the frames in chronological order, in the block discriminator; and
a leak location estimator (35) configured to set, among the blocks, a block whose counted value obtained in the counter (34) is equal to or larger than a predetermined value as an estimated gas leak location.

2. The gas leak location estimating device of claim 1, wherein the information processor (30) is configured to repeat the leak location estimator (35) a predetermined number of times, and to terminate the leak location estimator (35) when the block set as the estimated gas leak location remains unchanged.

3. The gas leak location estimating device of claim 1 or 2, wherein the information processor (30) further includes: a preset candidate selector configured to refer to a plurality of leak location candidates set in advance by specifying one or more positions in each of the frames, and to select, among the leak location candidates, a leak location candidate closest to the block set by the leak position estimator (35).

4. A gas leak location estimating system comprising:
the gas leak location estimating device (100) of any one of claims 1 to 3; and
an infrared camera (10) which has an imaging range containing a monitoring target and is configured to send the image information to the information processor (30).

5. A gas leak location estimating method acquiring image information on a plurality of frames from an infrared camera (10), the method comprising:
a gas detector detecting a gas area in a pixel unit from a frame input from the infrared camera (10);
a block discriminator dividing an image area of each of the frames into a plurality of blocks and discriminating the block as the gas area for each block in each frame when the block of which more than a predetermined percentage of the pixels among the pixels in the block is detected as the gas area by the gas detector (31);
a counter (34) counting a number of times each of the blocks is discriminated as the gas area, over the frames in chronological order, in the block discriminator; and
a leak location estimator (35) setting, among the blocks, a block whose counted value obtained in the counter (34) is equal to or larger than a predetermined value as an estimated gas leak location.

6. The gas leak location estimating method of claim 5, wherein the leak location estimator (35) is repeated a predetermined number of times, and the leak location estimator (35) is terminated when the block set as the estimated gas leak location remains unchanged.

7. The gas leak location estimating method of claim 5 or 6, further comprising:
a preset candidate selector referring to a plurality of leak location candidates set in advance by specifying one or more positions in each of the frames, and selecting, among the leak location candidates, a leak location candidate closest to the block set by the leak position estimator (35).

8. A gas leak location estimating program causing a computer which acquires image information on a plurality of frames from an infrared camera (10), to execute:
a gas detector detecting a gas area in a pixel unit from a frame input from the infrared camera (10);
a block discriminator dividing an image area of each of the frames into a plurality of blocks and discriminating the block as the gas area for each block in each frame when the block of which more than a predetermined percentage of the pixels among the pixels in the block is detected as the gas area by the gas detector (31);
a counter (34) counting a number of times each of the blocks is discriminated as the gas area, over the frames in chronological order, in the block discriminator; and
a leak location estimator (35) setting, among the blocks, a block whose counted value obtained in the counter (34) is equal to or larger than a predetermined value as an estimated gas leak location.

9. The gas leak location estimating program of claim 8 causing the computer to further execute:
a process of repeating the leak location estimator (35) a predetermined number of times and terminating the leak location estimator (35) when the block set as the estimated gas leak location remains unchanged.

10. The gas leak location estimating program of claim 8 or 9 causing the computer to further execute:
a preset candidate selector for referring to a plurality of leak location candidates set in advance by specifying one or more positions in each of the frames, and selecting, among the leak location candidates, a leak location candidate closest to the block set by the leak position estimator (35).

## Patentansprüche

1. Gasleckstellenschätzungsvorrichtung (100), umfassend:
einen Informationsprozessor (30), der konfiguriert ist, Bildinformationen über eine Vielzahl von Frames von einer Infrarotkamera (10) zu beschaffen, wobei der Informationsprozessor die folgenden Funktionskomponenten beinhaltet:
einen Gasdetektor (31), der konfiguriert ist, einen Gasbereich in einer Pixeleinheit von einem Frameeingang der Infrarotkamera (10) zu detektieren;
einen Blockdiskriminator (33), der konfiguriert ist, einen Bildbereich jedes der Frames in eine Vielzahl von Blöcken zu teilen und den Block als den Gasbereich für jeden Block in jedem Frame zu unterscheiden, wenn der Block, mit mehr als einem vorgegebenen Prozentsatz der Pixel unter den Pixeln in dem Block, von dem Gasdetektor (31) als der Gasbereich erfasst wird;
einen Zähler (34), der konfiguriert ist, eine Anzahl von Malen, mit der jeder der Blöcke als der Gasbereich unterschieden wird, über die Frames in chronologischer Reihenfolge in dem Blockdiskriminator zu zählen; und
einen Leckstellenschätzer (35), der konfiguriert ist, unter den Blöcken einen Block, dessen gezählter Wert, der in dem Zähler (34) erhalten wird, gleich wie oder größer als ein vorgegebener Wert ist, als eine geschätzte Gasleckstelle festzusetzen.

2. Gasleckstellenschätzungsvorrichtung nach Anspruch 1, wobei der Informationsprozessor (30) konfiguriert ist, den Leckstellenschätzer (35) für eine vorgegebene Anzahl von Malen zu wiederholen und den Leckstellenschätzer (35) zu beenden, wenn der Block, der als die geschätzte Gasleckstelle festgesetzt ist, unverändert bleibt.

3. Gasleckstellenschätzungsvorrichtung nach Anspruch 1 oder 2, wobei der Informationsprozessor (30) weiter beinhaltet:
einen voreingestellten Kandidatenauswähler, der konfiguriert ist, sich auf eine Vielzahl von Leckstellenkandidaten zu beziehen, die im Voraus festgesetzt werden, indem eine oder mehrere Positionen in jedem der Frames bestimmt werden, und unter den Leckstellenkandidaten einen Leckstellenkandidaten, der am nächsten zu dem Block ist, der von dem Leckpositionsschätzer (35) festgesetzt ist, auszuwählen.

4. Gasleckstellenschätzungssystem, umfassend:
die Gasleckstellenschätzungsvorrichtung (100) nach einem der Ansprüche 1 bis 3; und
eine Infrarotkamera (10), die eine Abbildungsweite aufweist, die ein Überwachungsziel enthält, und konfiguriert ist, die Bildinformationen an den Informationsprozessor (30) zu senden.

5. Gasleckstellenschätzungsverfahren, das Bildinformationen über eine Vielzahl von Frames von einer Infrarotkamera (10) beschafft, wobei das Verfahren umfasst:
einen Gasdetektor, der einen Gasbereich in einer Pixeleinheit eines Frameeingangs von der Infrarotkamera (10) detektiert;
einen Blockdiskriminator, der einen Bildbereich jedes der Frames in eine Vielzahl von Blöcken teilt und den Block als den Gasbereich für jeden Block in jedem Frame unterscheidet, wenn der Block, mit mehr als einem vorgegebenen Prozentsatz der Pixel unter den Pixeln in dem Block, von dem Gasdetektor (31) als der Gasbereich erfasst wird;
einen Zähler (34), der eine Anzahl von Malen, mit der jeder der Blöcke als der Gasbereich unterschieden wird, über die Frames in chronologischer Reihenfolge in dem Blockdiskriminator zählt; und
einen Leckstellenschätzer (35), der unter den Blöcken einen Block, dessen gezählter Wert, der in dem Zähler (34) erhalten wird, gleich wie oder größer als ein vorgegebener Wert ist, als eine geschätzte Gasleckstelle festsetzt.

6. Gasleckstellenschätzungsverfahren nach Anspruch 5, wobei der Leckstellenschätzer (35) für eine vorgegebene Anzahl von Malen wiederholt wird und der Leckstellenschätzer (35) beendet wird, wenn der Block, der als die geschätzte Gasleckstelle festgesetzt ist, unverändert bleibt.

7. Gasleckstellenschätzungsverfahren nach Anspruch 5 oder 6, weiter umfassend:
einen voreingestellten Kandidatenauswähler, der sich auf eine Vielzahl von Leckstellenkandidaten bezieht, die im Voraus festgesetzt sind, um eine oder mehrere Positionen in jedem der Frames zu bestimmen, und unter den Leckstellenkandidaten einen Leckstellenkandidaten, der am nächsten zu dem Block ist, der von dem Leckpositionsschätzer (35) festgesetzt ist, auswählt.

8. Gasleckstellenschätzungsprogramm, das einen Computer, der Bildinformationen über eine Vielzahl von Frames von einer Infrarotkamera (10) beschafft, veranlasst auszuführen:
einen Gasdetektor, der einen Gasbereich in einer Pixeleinheit eines Frameeingangs von der Infrarotkamera (10) detektiert;
einen Blockdiskriminator, der einen Bildbereich jedes der Frames in eine Vielzahl von Blöcken teilt und den Block als den Gasbereich für jeden Block in jedem Frame unterscheidet, wenn der Block, mit mehr als einem vorgegebenen Prozentsatz der Pixel unter den Pixeln in dem Block, von dem Gasdetektor (31) als der Gasbereich erfasst wird;
einen Zähler (34), der eine Anzahl von Malen, mit der jeder der Blöcke als der Gasbereich unterschieden wird, über die Frames in chronologischer Reihenfolge in dem Blockdiskriminator zählt; und
einen Leckstellenschätzer (35), der unter den Blöcken einen Block, dessen gezählter Wert, der in dem Zähler (34) erhalten wird, gleich wie oder größer als ein vorgegebener Wert ist, als eine geschätzte Gasleckstelle festsetzt.

9. Gasleckstellenschätzungsprogramm nach Anspruch 8, das den Computer veranlasst, weiter auszuführen:
einen Prozess zum Wiederholen des Leckstellenschätzers (35) für eine vorgegebene Anzahl von Malen und Beenden des Leckstellenschätzers (35), wenn der Block, der als die geschätzte Gasleckstelle festgesetzt ist, unverändert bleibt.

10. Gasleckstellenschätzungsprogramm nach Anspruch 8 oder 9, das den Computer veranlasst, weiter auszuführen:
einen voreingestellten Kandidatenauswähler, um sich auf eine Vielzahl von Leckstellenkandidaten zu beziehen, die im Voraus festgesetzt werden, indem eine oder mehrere Positionen in jedem der Frames bestimmt werden, und unter den Leckstellenkandidaten einen Leckstellenkandidaten, der am nächsten zu dem Block ist, der von dem Leckpositionsschätzer (35) festgesetzt ist, auszuwählen.

## Revendications

1. Dispositif d'estimation d'emplacement de fuite de gaz (100) comprenant :
un dispositif de traitement d'informations (30) configuré pour obtenir des informations d'image sur une pluralité de trames depuis une caméra infrarouge (10), le dispositif de traitement d'informations incluant les composants fonctionnels suivants :
un détecteur de gaz (31) configuré pour détecter une zone de gaz dans une unité de pixels depuis une entrée de trame depuis la caméra infrarouge (10) ;
un dispositif de distinction de bloc (33) configuré pour diviser une zone d'image de chacune des trames en une pluralité de blocs et distinguer le bloc comme la zone de gaz pour chaque bloc dans chaque trame lorsque le bloc dont plus d'un pourcentage prédéterminé des pixels parmi les pixels dans le bloc est détecté comme la zone de gaz par le détecteur de gaz (31) ;
un dispositif de comptage (34) configuré pour compter un nombre de fois où chacun des blocs est distingué comme la zone de gaz, sur les trames par ordre chronologique, dans le dispositif de distinction de bloc ; et
un estimateur d'emplacement de fuite (35) configuré pour définir, parmi les blocs, un bloc dont la valeur comptée obtenue dans le dispositif de comptage (34) est égale ou supérieure à une valeur prédéterminée comme un emplacement de fuite de gaz estimé.

2. Dispositif d'estimation d'emplacement de fuite de gaz selon la revendication 1, dans lequel le dispositif de traitement d'informations (30) est configuré pour répéter l'estimateur d'emplacement de fuite (35) un nombre prédéterminé de fois, et pour terminer l'estimateur d'emplacement de fuite (35) lorsque le bloc défini comme l'emplacement de fuite de gaz estimé reste inchangé.

3. Dispositif d'estimation d'emplacement de fuite de gaz selon la revendication 1 ou 2, dans lequel le dispositif de traitement d'informations (30) inclut en outre :
un sélecteur de candidat prédéfini configuré pour se rapporter à une pluralité de candidats d'emplacement de fuite définis à l'avance en spécifiant une ou plusieurs positions dans chacune des trames, et pour sélectionner, parmi les candidats d'emplacement de fuite, un candidat d'emplacement de fuite le plus proche du bloc défini par l'estimateur de position de fuite (35).

4. Système d'estimation d'emplacement de fuite de gaz comprenant :
le dispositif d'estimation d'emplacement de fuite de gaz (100) selon l'une quelconque des revendications 1 à 3 ; et
une caméra infrarouge (10) qui présente une plage d'imagerie contenant une cible de surveillance et est configurée pour envoyer les informations d'image au dispositif de traitement d'informations (30).

5. Procédé d'estimation d'emplacement de fuite de gaz obtenant des informations d'image sur une pluralité de trames depuis une caméra infrarouge (10), le procédé comprenant :
un détecteur de gaz détectant une zone de gaz dans une unité de pixels depuis une entrée de trame depuis la caméra infrarouge (10) ;
un dispositif de distinction de bloc divisant une zone d'image de chacune des trames en une pluralité de blocs et distinguant le bloc comme la zone de gaz pour chaque bloc dans chaque trame lorsque le bloc dont plus d'un pourcentage prédéterminé des pixels parmi les pixels dans le bloc est détecté comme la zone de gaz par le détecteur de gaz (31) ;
un dispositif de comptage (34) comptant un nombre de fois où chacun des blocs est distingué comme la zone de gaz, sur les trames par ordre chronologique, dans le dispositif de distinction de bloc; et
un estimateur d'emplacement de fuite (35) définissant, parmi les blocs, un bloc dont la valeur comptée obtenue dans le dispositif de comptage (34) est égale ou supérieure à une valeur prédéterminée comme un emplacement de fuite de gaz estimé.

6. Procédé d'estimation d'emplacement de fuite de gaz selon la revendication 5, dans lequel l'estimateur d'emplacement de fuite (35) est répété un nombre prédéterminé de fois, et l'estimateur d'emplacement de fuite (35) est terminé lorsque le bloc défini comme l'emplacement de fuite de gaz estimé reste inchangé.

7. Procédé d'estimation d'emplacement de fuite de gaz selon la revendication 5 ou 6, comprenant en outre :
un sélecteur de candidat prédéfini se rapportant à une pluralité de candidats d'emplacement de fuite définis à l'avance en spécifiant une ou plusieurs positions dans chacune des trames, et sélectionnant, parmi les candidats d'emplacement de fuite, un candidat d'emplacement de fuite le plus proche du bloc défini par l'estimateur de position de fuite (35).

8. Programme d'estimation d'emplacement de fuite de gaz amenant un ordinateur qui obtient des informations d'image sur une pluralité de trames depuis une caméra infrarouge (10) à exécuter :
un détecteur de gaz détectant une zone de gaz dans une unité de pixels depuis une entrée de trame depuis la caméra infrarouge (10) ;
un dispositif de distinction de bloc divisant une zone d'image de chacune des trames en une pluralité de blocs et distinguant le bloc comme la zone de gaz pour chaque bloc dans chaque trame lorsque le bloc dont plus d'un pourcentage prédéterminé des pixels parmi les pixels dans le bloc est détecté comme la zone de gaz par le détecteur de gaz (31) ;
un dispositif de comptage (34) comptant un nombre de fois où chacun des blocs est distingué comme la zone de gaz, sur les trames par ordre chronologique, dans le dispositif de distinction de bloc; et
un estimateur d'emplacement de fuite (35) définissant, parmi les blocs, un bloc dont la valeur comptée obtenue dans le dispositif de comptage (34) est égale ou supérieure à une valeur prédéterminée comme un emplacement de fuite de gaz estimé.

9. Programme d'estimation d'emplacement de fuite de gaz selon la revendication 8 amenant l'ordinateur à exécuter en outre :
un processus de répétition de l'estimateur d'emplacement de fuite (35) un nombre prédéterminé de fois et de terminaison de l'estimateur d'emplacement de fuite (35) lorsque le bloc défini comme l'emplacement de fuite de gaz estimé reste inchangé.

10. Programme d'estimation d'emplacement de fuite de gaz selon la revendication 8 ou 9 amenant l'ordinateur à exécuter en outre :
un sélecteur de candidat prédéfini pour se rapporter à une pluralité de candidats d'emplacement de fuite définis à l'avance en spécifiant une ou plusieurs positions dans chacune des trames, et sélectionner, parmi les candidats d'emplacement de fuite, un candidat d'emplacement de fuite le plus proche du bloc défini par l'estimateur de position de fuite (35).
